# EUROPÄISCHE PATENTANMELDUNG

(11) **EP 4 236 004 A2**
(43) Veröffentlichungstag der Anmeldung: **30.08.2023**
(21) Anmeldenummer: 23177571.9
(22) Anmeldetag: 30.07.2018
(51) Int. Cl.: H02J 3/38

(54) **BEREITSTELLEN VON REGELLEISTUNG BEIM BETRIEB EINER REGENERATIVEN STROMERZEUGUNGSEINHEIT, INSBESONDERE WINDENERGIEANLAGE**

(30) Priorität: 31.07.2017 DE 102017007132
(62) Teilanmeldung aus: 18186257.4
(71) Anmelder: Siemens Gamesa Renewable Energy Service GmbH, 20097 Hamburg (DE)
(72) Erfinder: Geisler, Jens, 24768 Rendsburg (DE)
(74) Vertreter: Glawe, Delfs, Moll

(57) **Zusammenfassung**

Von einer stärkemäßig fluktuierenden Primärquelle angetriebene regenerative Stromerzeugungseinheit, insbesondere Windenergieanlage (1), sowie Verfahren zum Bereitstellen von Regelleistung. Auf Abruf wird Regelleistung (ΔP_{RL}) bereitgestellt unter Anlegen eines Vorgabewerts für eine abzugebende reduzierte Leistung (P_{target}), die kleiner ist als eine verfügbare Leistung (Pₐᵥₐᵢₗ). Erfindungsgemäß vorgesehen sind (i) laufendes Bestimmen einer Ist-Unsicherheit, mit der ein Vorgabewert für die Regelleistung ΔP_{RL} eingehalten wird unter Berücksichtigung der fluktuierenden Primärquelle, (ii) laufendes Berechnen eines dynamischen Sicherheitsbands basierend auf der Ist-Unsicherheit, (iii) laufendes Anpassen des Vorgabewerts (P_{target}) basierend auf der geforderten Regelleistung und dem dynamischen Sicherheitsband. Die statistische Unsicherheit wird bestimmt und je nachdem der Vorgabewert dynamisch so verschoben, dass sich ein entsprechender Sicherheitspuffer (Sicherheitsband) ergibt: groß bei hoher Unsicherheit, klein bei geringer Unsicherheit. Bei gleichmäßigen Windbedingungen wird das Sicherheitsband deutlich schmaler, woraus ein größerer Vorgabewert resultiert. Es wird damit ein größerer Ertrag erreicht, und dennoch wird die Einhaltung der geforderten Regelleistung (mit einer vorbestimmten Vertrauenswahrscheinlichkeit) gewährleistet.

## Beschreibung

Die Erfindung betrifft ein Verfahren zum Bereitstellen von Regelleistung beim Betreiben einer regenerativen Stromerzeugungseinheit. Hierbei ist die regenerative Stromerzeugungseinheit von einer stärkemäßig fluktuierenden Primärquelle angetrieben. Insbesondere kann es sich hierbei um Windenergieanlagen handeln, die durch natürlichen Wind angetrieben werden, der typischerweise hinsichtlich seiner Stärke schwankt. Die Erfindung kann sich aber auch beziehen beispielsweise auf Sonnenenergieanlagen, bei denen unterschiedliche Bewölkungsverhältnisse ebenfalls für eine deutliche Fluktuation des Primärenergieträgers Sonnenlicht sorgen.

Durch immer größer werdenden Zubau von regenerativen Stromerzeugungseinheiten stellen sich in der Folge auch Fragen zu deren Beitrag zur Stabilität der Stromnetze. Ein wesentliches Ziel beim Betreiben von Energieübertragungs- und Energieverteilernetzen ist nicht nur der Energietransport an sich, sondern auch die zuverlässige und sichere Bereitstellung innerhalb vorgegebener Parameter. Diesem insgesamt als "Netzstabilität" bezeichneten Aspekt kommt eine ausgesprochen hohe Bedeutung zu. Die Bewahrung der Netzstabilität verlangt unter anderem ein ausgeglichenes Verhältnis von Erzeugung und Verbrauch der elektrischen Leistung. Dies zu erreichen stellt in der Praxis eine große Herausforderung dar, da insbesondere der Verbrauch stark schwankt und, durch den Zubau von regenerativen Kraftwerken, auch die Erzeugung in zunehmendem Umfang schwankt. Benötigt hierzu wird Regelleistung, und zwar positive Regelleistung zum Abfangen von Verbrauchsspitzen und negative Regelleistung zum Abfangen von Erzeugungsspitzen. Durch den umfangreichen Zubau von regenerativen Stromerzeugungseinheiten wird nunmehr auch von diesen verlangt, Regelleistung bereitzustellen.

Das gilt insbesondere für die Bereitstellung von negativer Regelleistung (d.h. Verringerung der Leistungsabgabe - Abregelung), welche stets auch von Stromerzeugungseinheiten mit fluktuierender Primärquelle, wie zum Beispiel Windenergieanlagen, unabhängig von den jeweiligen Bedingungen der Primärquelle (z. B. Windstärke bei Windenergieanlagen) durchgeführt werden kann. So wird beispielsweise von den besonders häufig als regenerative Stromerzeugungseinheit eingesetzten Windenergieanlagen verlangt, dass sie eine negative Regelleistung in der Weise zu erbringen haben, dass mindestens auf den geforderten Wert abgeregelt werden muss, aber die Abregelung auch bis zu 10 % größer sein kann (sogenannte Übererfüllung). Die Abregelung muss dabei meist derart erfolgen, dass die Erzeuger eine Leistung abgeben, die um einen bestimmten Betrag geringer ist, als maximal möglich wäre. Die maximal mögliche Abgabeleistung, auch "Verfügbare Leistung" genannt, ist dabei diejenige, die unter Berücksichtigung der aktuell gegebenen Bedingungen aus dem Angebot der Primärquelle maximal extrahiert werden könnte. Die Verfügbare Leistung schwankt also mit dem Angebot der Primärquelle und ggf. mit weiteren Randbedingungen, die die mögliche Extraktion einschränken. Der absolute Betrag der unter der Wirkung der Abregelung abgegebenen Leistung ("Abgeregelte Leistung") schwankt also ebenfalls relativ zur Verfügbaren Leistung. Ein exaktes Abregeln ist daher unter Berücksichtigung dieser natürlichen Schwankungen, wie sie insbesondere bei Windenergieanlagen auftreten, kaum praktisch durchführbar. Man begnügt sich daher mit einer gewissen statistischen Sicherheit, beispielsweise einer 95 %-Sicherheit.

Eine besondere Herausforderung stellt die Bestimmung der Verfügbaren Leistung dar. Denn sobald eine Erzeugereinheit Maßnahmen ergreift, um die Leistungsextraktion gezielt zu verringern, lässt sich nur noch schätzen, welche Leistung andernfalls extrahiert worden wäre ("was wäre gewesen, wenn..."). Für diese Schätzung sind bereits Verfahren bekannt, die meist auf mathematischen Modellen des Verhaltens des Erzeugers und der Primärquelle beruhen. Wie bei jeder Schätzung unterliegt diese *geschätzte* Verfügbare Leistung jedoch einer gewissen Unsicherheit bezüglich ihrer Abweichung zu der *wahren* Verfügbare Leistung. Die *wahre* Verfügbare Leistung wird erst dann wieder bekannt, wenn der Erzeuger sie auch tatsächlich extrahiert, wenn alle gezielten Reduktionen wieder aufgehoben werden. Wenn der Absolutwert der Reduktion aus einer geschätzten Verfügbaren Leistung und einer gewünschten relativen Reduktion (Regelleistung) bestimmt wurde, offenbart sich erst in dem Moment, in dem die Reduktion aufgehoben wird, wie stark die geschätzte und die wahre Verfügbare Leistung voneinander abwichen und damit, um wie viel die tatsächlich bereitgestellte Regelleistung von der gewünschten abweicht.

Ein Verfahren sowie eine Steuerungsvorrichtung zur Bereitstellung von Regelleistung bei Windenergieanlagen sind aus der DE 10 2012 215 565 A1 bekannt. Das Verfahren beruht auf Windprognosen. Ausgehend von diesen wird mittels statistischer Daten ein Windverlauf vorhergesagt (über Stunden oder Tage), wobei auch eine Kurzfristprognose über den nächsten 15 Minuten Zeitraum erstellt werden kann. Erfolgt ein Abruf von negativer Regelleistung, wird der aus der Prognose an sich ergebende Sollwert vermindert um eine konstante Leistungsdifferenz. Durch das Einstellen dieser konstanten Leistungsdifferenz wird erreicht, dass im Mittelwert die gewünschte geringere Leistungsabgabe erreicht wird. Allerdings bedeutet die Einschränkung auf "im Mittelwert", dass zwischenzeitlich die Werte nach oben oder unten abweichen können. Das vorstehend genannte Kriterium, wonach mindestens um den geforderten Wert der Regelleistung abgeregelt werden muss, kann damit nicht hinreichend sicher erfüllt werden.

Zwar könnte diesem Mangel dadurch begegnet werden, indem im Mittel einfach eine größere Leistungsverringerung eingestellt wird. Allerdings steht dem das Verlangen des Betreibers der Stromerzeugungseinheit entgegen, eine möglichst große Leistungsabgabe und damit einen möglichst großen Ertrag zu erzielen.

Der Erfindung liegt die Aufgabe zugrunde, ein verbessertes Verfahren sowie eine entsprechend verbesserte Steuerung für eine regenerative Stromerzeugungseinheit anzugeben, womit dieser Nachteil vermieden oder zumindest verringert werden kann.

Die erfindungsgemäße Lösung liegt in den Merkmalen der unabhängigen Ansprüche. Vorteilhafte Weiterbildungen sind Gegenstand der abhängigen Ansprüche.

Bei einem Verfahren zum Bereitstellen von Regelleistung beim Betreiben einer regenerativen Stromerzeugungseinheit, insbesondere einer Windenergieanlage, die von einer stärkemäßig fluktuierenden Primärquelle angetrieben wird zur Erzeugung elektrischer Leistung, die an ein Netz abgegeben wird, wobei auf Abruf zumindest negative Regelleistung (ΔP_{RL}) bereitgestellt wird unter Anlegen eines Vorgabewerts für eine abzugebende reduzierte Leistung (P_{target}), die kleiner ist als eine verfügbare Leistung (Pₐᵥₐᵢₗ),sind erfindungsgemäß die Schritte vorgesehen: laufendes Bestimmen einer Ist-Unsicherheit, mit der ein Vorgabewert für die Regelleistung (ΔP_{RL}) eingehalten wird unter Berücksichtigung der fluktuierenden Primärquelle, laufendes Berechnen eines dynamischen Sicherheitsbands basierend auf der Ist-Unsicherheit, laufendes Anpassen des Vorgabewerts basierend auf der geforderten Regelleistung und dem dynamischen Sicherheitsband. Zweckmäßigerweise erfolgt das Anpassen des Vorgabewerts nur so weit, dass der Vorgabewert einschließlich des Sicherheitsbands die Regelleistung einhält. Unter "Einhalten der Regelleistung" wird hierbei verstanden, dass die Anforderung in Bezug auf die Regelleistung (ΔP_{RL}) erfüllt (ggf. sogar übererfüllt) ist.

Kern der Erfindung ist der Gedanke, das Sicherheitsband dynamisch anhand von tatsächlichen Messwerten (Ist-Werten) fortlaufend zu berechnen. Damit wird das erfindungsgemäße Verfahren unabhängig von Prognosewerten und den damit einhergehenden Unsicherheiten. Durch die fortlaufende Berechnung und der damit einhergehenden Dynamik kann sich das erfindungsgemäße Verfahren selbsttätig auch auf stark schwankende Bedingungen der Primärquelle einstellen, ohne dabei im Fall ruhiger, gleichmä-ßigerer Bedingungen der Primärquelle unnötige Reserven aufzubauen und damit Ertrag zu verschenken. So kann beispielsweise bei der Primärquelle "Wind" im Fall stark schwankender Windbedingungen der Vorgabewert für die Leistungsabgabe so berechnet werden, dass sich ein verhältnismäßig breites Sicherheitsband ergibt, um so die Einhaltung der geforderten Regelleistung gewährleisten zu können (mit der vorbestimmten Vertrauenswahrscheinlichkeit); hingegen kann im Fall gleichmäßiger Windbedingungen erfindungsgemäß das Sicherheitsband deutlich schmaler gewählt werden, sodass ein größerer Vorgabewert für die Leistungsabgabe resultiert. Es wird damit ein größerer Ertrag erreicht, und dennoch wird die Einhaltung der geforderten Regelleistung (mit der vorbestimmten Vertrauenswahrscheinlichkeit) gewährleistet. Die Erfindung bestimmt also die statistische Unsicherheit und wählt je nachdem den Vorgabewert dynamisch so, dass sich ein entsprechender Sicherheitspuffer (ausgedrückt durch das Sicherheitsband) ergibt: groß bei hoher Unsicherheit, klein bei geringer Unsicherheit.

Im Grunde schafft die Erfindung eine Art Unsicherheit-Tracker. Dieser bestimmt je nach Windbedingungen, wie groß oder klein die Sicherheit ist, einen Vorgabewert einzuhalten, und berechnet daraus die Breite eines Sicherheitsbands. Der Tracker verschiebt dann im Weiteren den Vorgabewert so weit, dass das um den Vorgabewert gelegte Sicherheitsband der angeforderten Regelleistung entspricht. Die Kombination aus dynamischer Bestimmung des Sicherheitsbands einerseits und dem fortlaufenden Nachführen erreicht damit die Erfüllung der gegensätzlich erscheinenden Ziele, nämlich einer sicheren Einhaltung der Regelleistung einerseits und der Beibehaltung eines maximalen Ertrags andererseits. Dies ist im bekannten Stand der Technik ohne Beispiel.

Zweckmäßigerweise erfolgt das Bestimmen der Ist-Unsicherheit, mit der die geforderte Regelleistung (ΔP_{RL}) eingeregelt werden kann, unter Berücksichtigung einer gleitenden Differenz zwischen Ist-Leistung und vorgegebener Leistung, vorzugsweise mittels Berechnung der Standardabweichung. Somit kann auf einfache und elegante Weise eine dynamische Berechnung unter Verwendung von aktuellen Daten vorgenommen werden, ohne auf Prognosen angewiesen zu sein. Ferner ist eine solche gleitende Berechnung unter numerischen Aspekten sehr gut geeignet zur Echtzeitdurchführung auf einem Rechner, zum Beispiel der Betriebssteuerung und ihrer Komponenten. Weiter kann die Berechnung der Unsicherheit weiter optimiert werden durch frequenzmäßiges Wichten der gleitenden Differenz, insbesondere mittels einer Tiefpassfilterung. Auf diese Weise werden nur niederfrequente und bleibende Abweichungen berücksichtigt. Hochfrequente Störungen, wie Messrauschen, können so nicht zu Verfälschungen führen.

Aus Gründen einfacherer Darstellung erfolgt die weitere Erläuterung am Beispiel einer Windenergieanlage mit der Primärquelle "Wind".

Vorzugsweise werden ferner bei dem Bestimmen der Ist-Unsicherheit Messfehler bei der Bestimmung Windstärke und/oder Windrichtung berücksichtigt. So ist insbesondere die Messung der Windrichtung Unsicherheiten unterworfen, zumal dann, wenn die Windrichtungssensoren wie üblich hinter den Rotorblättern angeordnet sind und sich in dem Strömungsnachlauf der Rotorblätter befinden. Hier kann es leicht zu Verfälschungen kommen. Für die Messung der Windstärke gilt Entsprechendes, insbesondere wenn der Hauptrotor der Windenergieanlage dazu benutzt wird. Ungenauigkeiten in den Kalibrierungen und Datenblättern wirken sich hierbei ebenfalls steigernd auf die Unsicherheit aus.

Aus der Ist-Unsicherheit wird mit Vorteil das Sicherheitsband berechnet unter Verwendung einer Vertrauenswahrscheinlichkeit. Bewährt haben sich Werte von 95% oder 98% für die Vertrauenswahrscheinlichkeit.

Es hat sich bewährt, bei der Bestimmung der Unsicherheit ferner Modellfehler zu berücksichtigen, beispielsweise solche bei der Bestimmung der verfügbaren Leistung bezüglich eines Verlustleistungsmodells etc. Damit wird der Erkenntnis Rechnung getragen, dass die üblicherweise verwendeten Modelle schon aus Aufwandsgründen nicht vollkommen exakt sind, sondern Vereinfachungen unterliegen. Es können somit auch Aspekte berücksichtigt bzw. ausgeglichen werden, die in den Modellen üblicherweise nicht enthalten sind. Mit Vorteil wird insbesondere die Umgebungstopographie, insbesondere Geländeverlauf und/oder benachbarte Stromerzeugungseinheiten, berücksichtigt. Damit kann der Erkenntnis Rechnung getragen werden, dass sich bei bestimmten Windrichtungen, wenn die Windenergieanlage im Nachlauf von Geländeunebenheiten und/oder benachbarten Windenergieanlagen betrieben wird, Verfälschungen ergeben können. Es können so mit Vorteil Überlagerungseffekte mit benachbarten Windenergieanlagen, insbesondere hinsichtlich Abschattungseffekten im Nachlauf berücksichtigt werden. Das gilt vor allem dann, wenn dabei der Betriebszustand der benachbarten Windenergieanlagen berücksichtigt wird. Besonders zweckmäßig ist, wenn hierbei eine aktuelle Drosselung der Windenergieanlagen, insbesondere einer der benachbarten Windenergieanlagen, berücksichtigt wird. Denn es hat sich gezeigt, dass ohne eine solche Berücksichtigung erhebliche Fehler auftreten können. Entsprechendes gilt für die Berücksichtigung von statistischer Überlagerung mehrerer Parameter, ausgewählt aus einer Gruppe bestehend aus Stärke der Primärquelle (insbesondere Windgeschwindigkeit), verfügbarer Wirkleistung der Stromerzeugungseinheit und/oder Verlusten bei gruppenweiser Anordnung mehrerer Stromerzeugungseinheiten.

Zweckmäßigerweise ist ferner vorgesehen eine Adaption von Modellparametern, insbesondere durch einen Soll-Ist-Vergleich bei ungedrosseltem Betrieb. Hiermit kann eine Feinanpassung und Verbesserung des Modells erreicht werden, sodass die Unsicherheit verringert werden kann. Lässt sich das Modell nicht weiter verbessern, kann über eine Korrelation zwischen den Abweichungen zwischen Modell und Messwerten und bestimmten Umweltparametern auch ermittelt werden, unter welchen Bedingungen das Modell mit größeren Fehlern behaftet ist.

Bei dem Berechnen des dynamischen Sicherheitsbands wird mit Vorteil ein wählbarer Faktor berücksichtigt. Hiermit kann auf die Breite B des Sicherheitsbands Einfluss genommen werden, und zwar in Abhängigkeit davon, welcher Grad an Vertrauenswahrscheinlichkeit gewünscht ist. Bewährt haben sich Werte von 2 für 95% Sicherheit oder von 2,5 für 98% Sicherheit.

Es sei angemerkt, dass das erfindungsgemäße Verfahren sowohl für ungedrosselt betriebene regenerative Stromerzeugungseinheiten wie auch für gedrosselt betriebene angewendet werden kann. Unter gedrosselt betrieben wird hierbei verstanden, dass eine Leistungsbeschränkung für die regenerative Stromerzeugungseinheit besteht (bspw. darf eine Windenergieanlage oder ein Windpark nur maximal 80% seiner Nennleistung einspeisen). Dieser Drosselungswert ist eine absolute Obergrenze für die abzugebende Leistung und begrenzt somit auch die verfügbare Leistung. Zusätzlich angeforderte Regelleistung muss also ggf. mit Bezug zu dem Drosselwert eingehalten werden. Das bedeutet: ist der Drosselwert kleiner als die verfügbare Leistung, so ist für die Zwecke dieser Erfindung der Drosselwert zu verwenden als verfügbare Leistung (Pₐᵥₐᵢₗ). Bei einer ungedrosselten Anlage dagegen ist die Regelleistung immer mit Bezug zur verfügbaren Leistung zu verstehen.

Ferner sei angemerkt, dass es alternativ auch vorgesehen sein kann, dass die Breite B eines einzuhaltenden Sicherheitsbands nicht auf die abgerufene negative Regelleistung addiert, sondern von der limitierten verfügbaren Leistung subtrahiert wird, was im Endergebnis bei der Berechnung von P_{target} zu demselben Wert führt. In diesem Fall könnte man das Sicherheitsband auch als Fehlerband und die damit korrigierte verfügbare Leistung als mit gegebener Konfidenz K (minimal) verfügbare Leistung betrachten.

Als regenerative Stromerzeugungseinheit wird vorzugsweise eine Windenergieanlage verwendet. Es kann sich um eine einzelne Windenergieanlage handeln oder um eine Mehrzahl von operativ zusammengefassten Windenergieanlagen (auch als Windpark bezeichnet) .

Die Erfindung erstreckt sich ferner auf ein entsprechendes Verfahren zum Betreiben einzelner Windenergieanlagen oder eines Windparks mit mehreren Windenergieanlagen. Ferner erstreckt sie sich auf Windenergieanlagen, die mit einer Steuerung zur Durchführung des Verfahrens ausgeführt sind, sowie einen Windpark mit entsprechenden Windenergieanlagen.

Nachfolgend wird die Erfindung unter Bezugnahme auf die beigefügte Zeichnung anhand eines Ausführungsbeispiels näher erläutert. Es zeigen:
- Fig. 1: eine schematische Ansicht einer Windenergieanlage gemäß einem Ausführungsbeispiel der Erfindung;
- Fig. 2: ein Blockschaltbild für einen Teil einer Leistungssteuerung der Windenergieanlage zur Ausführung des Verfahrens;
- Fig. 3: einen Zeitverlauf der Leistung bei Abruf von Regelleistung gemäß dem Ausführungsbeispiel; und
- Fig. 4A, B: Zeitverläufe zur Leistung bei Abruf von Regelleistung gemäß dem Stand der Technik.

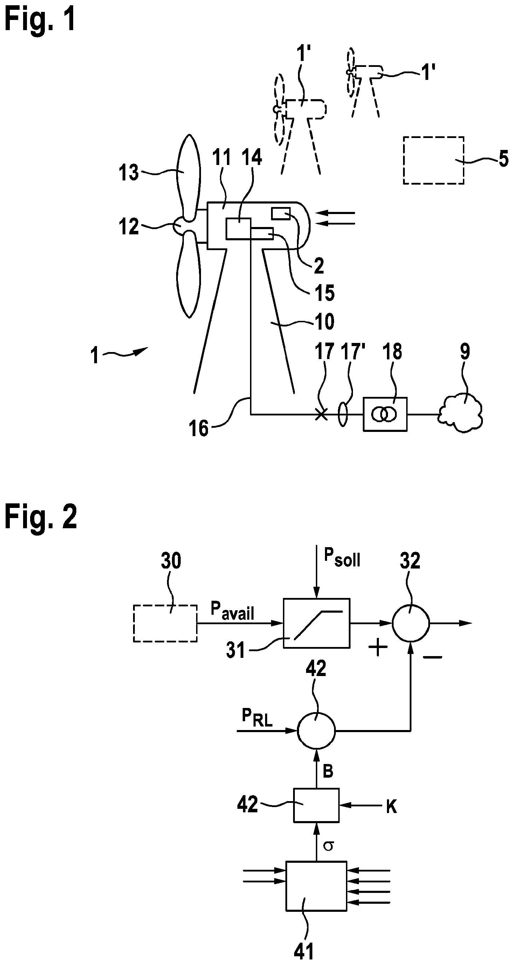

Eine Windenergieanlage 1 zur Ausführung des erfindungsgemäßen Verfahrens gemäß einem Ausführungsbeispiel der Erfindung ist in Fig. 1 dargestellt und ein Ausführungsbeispiel für einen entsprechenden Teil einer Leistungssteuerung 3 der Windenergieanlage 1 (bzw. des Windparks) zur Ausführung des Verfahrens ist in Fig. 2 dargestellt.

Die Windenergieanlage 1 ist vorzugsweise zusammen mit weiteren, gleichartigen Windenergieanlagen 1' angeordnet als Teil eines Windparks, der von einem Parkmaster 5 zentral gesteuert wird. Der Aufbau der Windenergieanlage 1 und der Leistungssteuerung 3 zur Ausführung des erfindungsgemäßen Verfahrens wird nachfolgend exemplarisch anhand der Windenergieanlage 1 erläutert.

Die in ihrer Gesamtheit mit der Bezugsziffer 1 bezeichnete Windenergieanlage umfasst einen Turm 10 mit einer Gondel 11, welche in Azimutrichtung schwenkbeweglich auf dem oberen Ende des Turms 10 angeordnet ist. Ein Windrotor 12 mit mehreren Rotorblättern 13 ist drehbar an einer Stirnseite der Gondel 11 angeordnet. Der Windrotor 12 treibt über eine (nicht dargestellte) Rotorwelle einen Generator 14 an, der mit einem Umrichter 15 verbunden ist zur Erzeugung elektrischer Energie. Die so erzeugte elektrische Energie wird über eine Anschlussleitung 16 durch den Turm 10 zu einem am Fuß des Turms 10 angeordneten Anlagentransformator 18 geführt, und von diesem nach Wandlung auf ein Mittelspannungsniveau an ein Netz 9 abgegeben (hierbei kann es sich um ein parkinternes Netz oder um ein Übertragungs- bzw. Verteilungsnetz handeln). An der Anschlussleitung 16 sind ferner Spannungs- und Stromsensoren 17, 17` angeordnet.

Der Betrieb der Windenergieanlage 1 wird kontrolliert von einer Betriebssteuerung 2, die in der Gondel 11 angeordnet ist. An die Betriebssteuerung 2 sind (über nicht dargestellte Leitungen) Messsignale von den Spannungs- und Stromsensoren 17, 17` angeschlossen. Ferner an die Betriebssteuerung 2 angeschlossen sind Eingangssignale von einer übergeordneten Instanz (beispielsweise Netzbetreiber). Diese sind in Fig. 1 visualisiert durch zwei Pfeildarstellungen, die für eine eventuelle Leistungsdrosselung auf einen maximalen Sollwert Pₛₒₗₗ und eine abgerufene (negative) Regelleistung ΔP_{RL} stehen.

Zuerst sei das aus dem Stand der Technik bekannte Verfahren zur Bereitstellung von negativer Regelleistung erläutert. Unter negativer Regelleistung wird verstanden, dass die Windenergieanlage auf Abruf die Leistungsabgabe um einen vorgegebenen Betrag herunterregelt. Dies ermöglicht dem Netzbetreiber eine Stabilisierung des Netzes in Situationen mit einem Leistungsüberangebot. Der Netzbetreiber erwartet eine prompte und genaue Erfüllung der Vorgaben; dazu gibt er in der Regel eine Toleranz vor in dem Sinne, dass die Vorgabe in jedem Fall erfüllt werden muss (Mindesterfüllung), aber um einen gewissen Betrag auch übertroffen werden kann (beispielsweise 10 % Übererfüllung). Wesentlich ist, dass mindestens die Vorgabe erbracht werden muss - dies ist sicherzustellen.

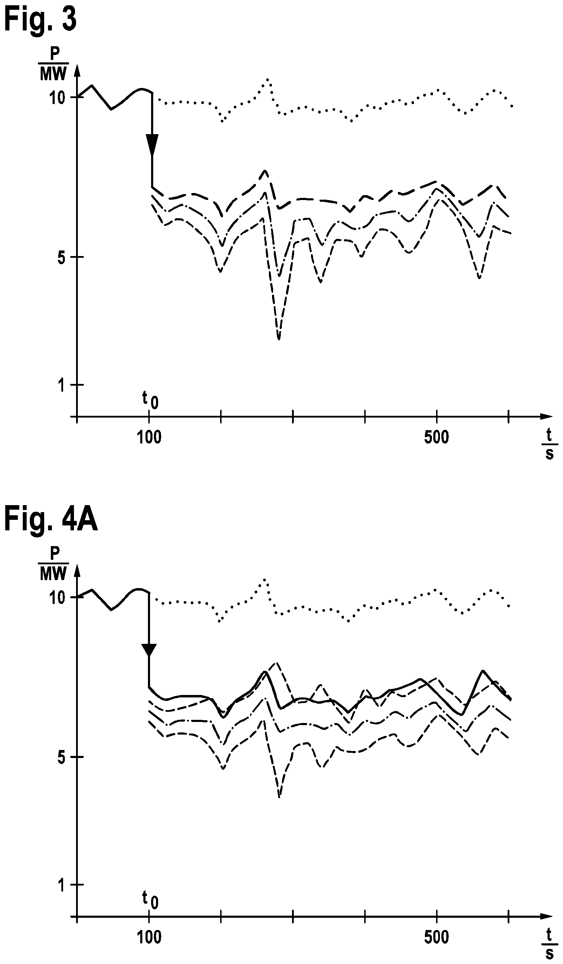

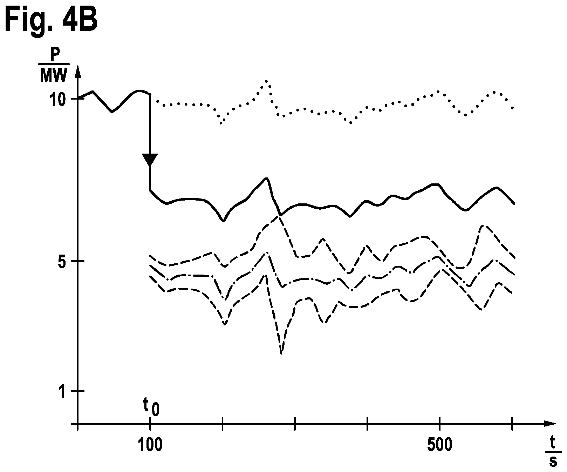

Vorliegend sei für die Figuren 4A, B angenommen, dass die Windenergieanlage (bzw. ein Windpark) bei den vorherrschenden Windbedingungen eine Leistung von etwa 10 MW abgeben (siehe die oberste Linie in Fig. 4A, B). Ferner sei angenommen, dass zum Zeitpunkt t₀ eine negative Regelleistung ΔP_{RL} von 3 MW angefordert werde. Dies ist in Fig. 4A, B visualisiert durch den Liniensprung in der durchgezogenen Linie zum Zeitpunkt t₀. Die bei den vorherrschenden Windbedingungen an sich im Folgenden mögliche Leistungsabgabe (wahre verfügbare Leistung) ist durch die gepunktete Linie visualisiert. Man erkennt, dass im Zeitpunkt ab t₀ die durchgezogene Linie genau um 3 MW tiefer liegt als die gepunktete Linie der an sich möglichen Leistungsabgabe (Verfügbare Leistung Pₐᵥₐᵢₗ). Dieser Wert kann aber nicht unmittelbar als Vorgabewert für die Leistungsabgabe der Windenergieanlage verwendet werden, da er ja im abgeregelten Betrieb nicht bekannt ist.

Da gegenüber dem Netzbetreiber die Einhaltung der angeforderten Regelleistung aber als Mindestwert garantiert werden muss, eine Übererfüllung aber möglich ist, wird aus Vorsichtsgründen ein erniedrigter Wert als Vorgabewert verwendet. Bei der in Fig. 4A dargestellten bekannten Variante wird der Sollwert so eingestellt, dass die angeforderte Regelleistung von 3 MW um ca. 24 % vergrößert wird, letztlich also der Abstand zu der an sich möglichen Leistungsabgabe Pₐᵥₐᵢₗ (siehe gepunktete Linie) ca. 3,7 MW beträgt. Der sich so ergebende Vorgabewert ist in Fig. 4A durch die strichpunktierte Linie dargestellt. Jedoch ist die Einregelung einer Leistungsvorgabe nur mit Schwankungen realisierbar, und ferner hat sich in der Praxis gezeigt, dass auch die Bestimmung der Windgeschwindigkeit und damit die Bestimmung der an sich möglichen verfügbaren Leistung Pₐᵥₐᵢₗ beträchtlichen Ungenauigkeiten unterworfen sein kann. Es ergibt sich somit ein Unsicherheitsband in Bezug auf die tatsächlich eingespeiste Leistung und die wahre Leistungsreserve (Regelleistung). Dieses Unsicherheitsband ist in Fig. 4A durch die gestrichelten Linien umgrenzt und durch Grauschattierung hervorgehoben. Man erkennt, dass das Unsicherheitsband zu einigen Zeitpunkten über die durchgezogene Linie nach oben hinausragt. Das bedeutet, dass zu viel Leistung eingespeist wird, also die zugesagte negative Regelleistung nicht eingehalten werden kann. Die Vorgabe des Netzbetreibers wird also insoweit nicht erfüllt.

Zur Abhilfe kann vorgesehen sein, dass der modifizierte Sollwert stärker abgesenkt wird. Dies ist in Fig. 4B dargestellt. Hierbei wird die an sich angeforderte Regelleistung von 3 MW um ca. 75 % vergrößert (also etwa der dreifache Sicherheitspuffer verglichen mit der Variante gemäß Fig. 4A). Deutlich ist in Fig. 4B erkennbar, dass der so modifizierte Vorgabewert (strichpunktierte Linie) nun beträchtlich niedriger wird. Damit wird erreicht, dass das Unsicherheitsband (grauschattierter Bereich, begrenzt durch die beiden gestrichelten Linien) zu keinem Zeitpunkt die durchgezogene Linie überschreitet, sondern stets unter ihr bleibt oder sie maximal an einem Punkt erreicht.

Bei der in Fig. 4B dargestellten Variante wird die Vorgabe des Netzbetreibers also sicher eingehalten. Dies geschieht jedoch um einen hohen Preis, nämlich dass nunmehr ein ausgesprochen niedriger Vorgabewert (strichpunktierte Linie) eingestellt ist. Es wird also bezogen auf den Grenzwert (durchgezogene Linie) erheblich Einspeiseleistung verschenkt, die dem Betreiber der Windenergieanlage nicht vergütet wird.

Diese Nachteile vermeidet die Erfindung. Es wird nun Bezug genommen auf Fig. 2, welche eine Leistungssteuerung 3 als Teil der Betriebssteuerung 2 bzw. des Parkmasters 5 darstellt. In ihr ist das erfindungsgemäße Verfahren implementiert. Die Leistungssteuerung 3 umfasst einen Limiter 31. An dessen Eingang ist ein Wert für die von einem Schätzer 30 geschätzte verfügbare Leistung Pₐᵥₐᵢₗ angeschlossen. Der Limiter 31 weist ferner einen Eingang für eine bei gedrosseltem Betrieb maximal einzuhaltende Leistung Pₛₒₗₗ auf. Der Limiter 31 ist dazu ausgebildet, die niedrigere dieser beiden Leistungen Pₐᵥₐᵢₗ und Pₛₒₗₗ auszugeben. Der somit begrenzte Leistungswert wird an einen positiven Eingang eines Subtraktionsglieds 32 angelegt. Die Leistungssteuerung 3 weist ferner eine Verschiebeeinheit 4 auf. Diese umfasst ein Berechnungsmodul 41. An dieses ist eine Mehrzahl von Parametern angelegt. Die Parameter umfassen Messunsicherheiten, insbesondere in Bezug auf die Bestimmung der Windgeschwindigkeit v_{w} und des Windwinkels v_{α} sowie in Bezug auf Modellunsicherheiten bei der Bestimmung/Schätzung der verfügbaren Leistung Pₐᵥₐᵢₗ, Einflüsse aufgrund von Topographie oder von benachbarten Windenergieanlagen etc. Hieraus wird anhand der aktuellen Daten eine Ist-Unsicherheit berechnet und als Wert σ ausgegeben. Dieser ist angelegt als Eingangssignal an einen Multiplikator 42. Dieser weist einen einstellbaren Multiplikationswert K auf. Über diese Modifikation K wird die Breite B eines Sicherheitsbands in Bezug auf den Wert σ eingestellt. In dem dargestellten Ausführungsbeispiel sei der Wert K = 2,5 gewählt für eine Vertrauenswahrscheinlichkeit von ca. 98 %. Somit ergibt sich ein Maß für eine Breite B eines einzuhaltenden Sicherheitsbands, welches als Ausgangssignal von dem Multiplikator 42 ausgegeben und an einen Eingang eines Summationsgliedes 43 angelegt ist. An den anderen Eingang des Summationsgliedes 42 ist als Eingangswert ein Parameter für die abgerufene negative Regelleistung ΔP_{RL} angelegt. Das Summationsglied 42 berechnet daraus durch Addition einen Wert für eine Verschiebeleistung P_{offset} und gibt diesen aus an einen negativen Eingang des Subtraktionsgliedes 32. Der von dem Limiter 31 ausgegebene Ausgangswert wird damit entsprechend um den Betrag der Verschiebeleistung P_{offset} verringert. Daraus ergibt sich ein modifizierter Wert, der als Vorgabewert P_{target} von der Leistungssteuerung 3 ausgegeben wird. Dieser wird dann von der Betriebssteuerung 2 bzw. dem Parkmaster 5 in an sich bekannter Weise zur Einstellung der Leistungsabgabe der Windenergieanlage 1 verwendet. Insbesondere wenn sich die im Berechnungsmodul 41 ermittelte Unsicherheit auf die geschätzte verfügbare Leistung bezieht, ist es alternativ auch denkbar, dass die Breite B eines einzuhaltenden Sicherheitsbands nicht auf abgerufene negative Regelleistung addiert, sondern von der limitierten verfügbaren Leistung subtrahiert wird, was im Endprodukt der Berechnung (P_{target}) den gleichen Effekt hätte. In diesem Fall könnte das Sicherheitsband auch als Fehlerband und die damit korrigierte verfügbare Leistung als mit gegebener Konfidenz K (minimal) verfügbare Leistung betrachtet werden.

Die Wirkung der Erfindung ist in Fig. 3 dargestellt. Wie auch in den Fig. 4A, B ist die anfänglich unbeschränkt abgegebene Leistung mit einer fetten durchgezogenen Linie dargestellt. Zum Zeitpunkt t₀ wird eine negative Regelleistung ΔP_{RL} von 3 MW abgerufen, so dass die durchgezogene Linie ab diesem Zeitpunkt sich sprungartig um 3 MW verringert (ab diesem Zeitpunkt in Fig. 3 als eine fette gestrichelte Linie dargestellt).

Anders als im Stand der Technik gemäß Fig. 4A, B ist der Vorgabewert (punktstrichlierte Linie) nicht um einen konstanten Wert nach unten zu geringerer Leistung hin verschoben, sondern die Verschiebung wird stets neu dynamisch berechnet und erfolgt nur so weit, dass die Grenze des Unsicherheitsbereichs (gestrichelte Linie) genau der Anforderung in Bezug auf die Regelleistung entspricht (fette Linie). Dieses planvolle Zusammenfallen der beiden Linien wird in Fig. 3 visualisiert mit der fetten gestrichelten Linie. Man erkennt, dass das Unsicherheitsband zu keinem Zeitpunkt die angeforderte Regelleistung (fette Linie) überschreitet, d. h. die Anforderung bezüglich Regelleistung wird stets erfüllt.

Dies ist eine erhebliche Verbesserung gegenüber dem Stand der Technik gemäß Fig. 4A, wo es gelegentlich zu Überschreitungen kam. Ferner liegt erfindungsgemäß in Fig. 3 der Vorgabewert (punktstrichliert) deutlich höher als im Stand der Technik gemäß Fig. 4B; es wird also zugleich ein höherer Ertrag erzielt. Die Erfindung bietet somit hinsichtlich der Bereitstellungsqualität wie auch hinsichtlich der Ertragsquantität Vorteile gegenüber dem Stand der Technik.

## Patentansprüche

1. Verfahren zum Bereitstellen von Regelleistung beim Betreiben einer regenerativen Stromerzeugungseinheit, insbesondere einer Windenergieanlage (1), die von einer stärkemäßig fluktuierenden Primärquelle angetrieben wird zur Erzeugung elektrischer Leistung, die an ein Netz (9) abgegeben wird, wobei auf Abruf zumindest negative Regelleistung (ΔP_{RL}) bereitgestellt wird unter Anlegen eines Vorgabewerts für eine abzugebende reduzierte Leistung (P_{target}), die kleiner ist als eine verfügbare Leistung (Pₐᵥₐᵢₗ),
**gekennzeichnet durch** die Schritte
laufendes Bestimmen einer Ist-Unsicherheit, mit der ein Vorgabewert für die Regelleistung ΔP_{RL} eingehalten wird unter Berücksichtigung der fluktuierenden Primärquelle, laufendes Berechnen eines dynamischen Sicherheitsbands basierend auf der Ist-Unsicherheit,
laufendes Anpassen des Vorgabewerts (P_{target}) basierend auf der geforderten Regelleistung und dem dynamischen Sicherheitsband.

2. Verfahren nach Anspruch 1, **gekennzeichnet durch** Bestimmen der Ist-Unsicherheit unter Berücksichtigung einer gleitenden Differenz zwischen Ist-Leistung und vorgegebener Leistung, vorzugsweise mittels Berechnung der Standardabweichung.

3. Verfahren nach Anspruch 2, **gekennzeichnet durch** frequenzmäßiges Wichten der gleitenden Differenz, insbesondere mittels einer Tiefpassfilterung.

4. Verfahren nach einem der vorangehenden Ansprüche, **gekennzeichnet durch** Berechnen des Sicherheitsbands unter Verwendung einer Vertrauenswahrscheinlichkeit, insbesondere für 95% oder 98%-Vertrauenswahrscheinlichkeit.

5. Verfahren nach einem der vorangehenden Ansprüche, **dadurch gekennzeichnet, dass** das Anpassen des Vorgabewerts (P_{target}) nur so weit erfolgt, dass der Vorgabewert einschließlich des Sicherheitsbands die Regelleistung (ΔP_{RL}) einhält.

6. Verfahren nach einem der vorangehenden Ansprüche, **gekennzeichnet durch** Bestimmen der Ist-Unsicherheit unter Berücksichtigung von Messfehlern bei der Bestimmung Windstärke und/oder Windrichtung.

7. Verfahren nach einem der vorangehenden Ansprüche, **gekennzeichnet durch** Bestimmen der Ist-Unsicherheit unter Berücksichtigung von Modellfehlern bei der Bestimmung der verfügbaren Leistung, insbesondere hinsichtlich einem Verlustleistungsmodell etc.

8. Verfahren nach Anspruch 7, **gekennzeichnet durch** Berücksichtigen von Umgebungstopographie, insbesondere Geländeverlauf und/oder benachbarte Stromerzeugungseinheiten.

9. Verfahren nach einem der Ansprüche 7 oder 8, **gekennzeichnet durch** Adaption von Modellparametern, insbesondere durch einen Soll-Ist-Vergleich bei ungedrosseltem Betrieb.

10. Verfahren nach einem der Ansprüche 6 bis 9, **gekennzeichnet durch** Bestimmen der Ist-Unsicherheit mittels statistischer Überlagerung mehrerer Parameter, insbesondere interner Parameter der regenerativen Stromerzeugungseinheit und/oder externer Parameter, insbesondere Umweltparameter wie Windgeschwindigkeit, verfügbarer Wirkleistung der Stromerzeugungseinheit und/oder Verlusten bei gruppenweiser Anordnung mehrerer Stromerzeugungseinheiten.

11. Verfahren nach einem der vorangehenden Ansprüche, **gekennzeichnet durch** Berücksichtigung von Überlagerungseffekten mit benachbarten Stromerzeugungseinheiten, insbesondere hinsichtlich Abschattungseffekten im Nachlauf.

12. Verfahren nach Anspruch 11, **gekennzeichnet durch** Einbeziehen einer aktuellen Drosselung der Stromerzeugungseinheiten, insbesondere einer der benachbarten Stromerzeugungseinheiten.

13. Verfahren nach einem der vorangehenden Ansprüche, **gekennzeichnet durch** Berücksichtigen eines wählbaren Faktors bei dem Berechnen des dynamischen Sicherheitsbands, der vorzugsweise abhängig von einer Vertrauenswahrscheinlichkeit gewählt ist.

14. Verfahren nach einem der vorangehenden Ansprüche, **dadurch gekennzeichnet, dass** die regenerative Stromerzeugungseinheit gedrosselt oder ungedrosselt betrieben wird.

15. Verfahren nach einem der vorangehenden Ansprüche, **gekennzeichnet durch** Verwenden einer Windenergieanlage als Stromerzeugungseinheit, insbesondere einer Mehrzahl von operativ zusammengefassten Windenergieanlagen (Windpark).

16. Regenerative Stromerzeugungseinheit, insbesondere Windenergieanlage (1), die von einer stärkemäßig fluktuierenden Primärquelle angetrieben ist, mit einem Ausgang zur Abgabe der erzeugten Leistung und einem Signaleingang zum Abruf zumindest negativer Regelleistung (ΔP_{RL}) unter Anlegen eines Vorgabewerts für eine abzugebende reduzierte Leistung (P_{target}), die kleiner ist als eine verfügbare Leistung (Pₐᵥₐᵢₗ), sowie einer Betriebssteuerung (2), die eine Leistungssteuerung (3) umfasst,
**dadurch gekennzeichnet, dass**
die Leistungssteuerung dazu ausgebildet ist, ein Verfahren nach einem der Ansprüche 1 bis 15 auszuführen.
